# EUROPÄISCHE PATENTANMELDUNG

(11) **EP 4 512 624 A1**
(43) Veröffentlichungstag der Anmeldung: **26.02.2025**
(21) Anmeldenummer: 24195396.7
(22) Anmeldetag: 20.08.2024
(51) Int. Cl.: B41J 2/17, B41J 2/195

(54) **TEMPERIERVORRICHTUNG UND VERFAHREN ZUM TEMPERIEREN VON TINTE FÜR EINEN TINTENDRUCKER**

(30) Priorität: 24.08.2023 DE 102023122687
(71) Anmelder: Canon Production Printing Holding B.V., 5914 HH Venlo (NL)
(72) Erfinder: HITZLSPERGER, Florian, 5914 HH VENLO (NL); RUMMELSBERGER, Christoph, 5914 HH VENLO (NL); STÖCKLE, Ulrich, 5914 HH VENLO (NL); VAN DER BOS, Arjan, 5914 HH VENLO (NL); COX, Jeroen, 5914 HH VENLO (NL)
(74) Vertreter: Canon Production Printing IP Department

(57) **Zusammenfassung**

Eine Temperiervorrichtung weist eine Fluidquelle (12) auf, die ein Temperierfluid auf einem vorbestimmten Temperaturniveau aufweist. Das Temperierfluid wird einer Regeleinrichtung (22) zugeführt, das einen Volumenstrom pro Zeitdauer des Temperierfluids abhängig von einem gemessenen Istwert der Tintentemperatur steuert. Das Temperierfluid wird einem Wärmetauscher (26) zugeführt, in dem die Wärme des Temperierfluids auf die Tinte übertragen wird, um die Tinte nach und nach auf Solltemperatur zu erwärmen. Die gewünschte Solltemperatur der Tinte wird dadurch geregelt, dass die Tintentemperatur nach dem Wärmetauscher (26) gemessen und als Istwert zurück zum Regeleinrichtung (22) gekoppelt wird, wo ein Volumenstrom eingestellt wird, abhängig von der Differenz zwischen Istwert und Sollwert. Die so temperierte Tinte wird einer Druckeinheit (40) des Tintendruckers zum Bedrucken eines Bedruckstoffs zugeführt.

## Beschreibung

Die Erfindung betrifft eine Temperiervorrichtung zum Temperieren von Tinte für einen Tintendrucker hoher Druckleistung. Ferner betrifft die Erfindung ein Verfahren zum Temperieren von Tinte für einen Tintendrucker hoher Druckleistung.

Zum ein- oder mehrfarbigen Bedrucken eines Aufzeichnungsträgers aus verschiedensten Materialien, z.B. Papier, können Tintendrucker eingesetzt werden. Der Aufbau solcher Tintendruckgeräte ist hinreichend bekannt. Insbesondere sind digitale Hochgeschwindigkeits-Tintendrucker bekannt, bei denen Tintentropfen zum Erzeugen eines Druckbilds aus Düsen eines Druckkopfs einer Druckeinheit auf einen schnell bewegten Aufzeichnungsträger ausgestoßen werden.

Solche Hochleistung-Tintendrucker sollten mit hoher Druckqualität drucken können. Am Aufstellungsort des Tintendruckers können durchaus unterschiedliche Umgebungstemperaturen herrschen, die sich auch während des Betriebs durchaus ändern können. So kann die Umgebungstemperatur am Ort des Tintendruckers durchaus zwischen 15° und 45 °C liegen, die möglicherweise die Bestandteile des Tintendruckers, wie z.B. die Tinte beeinflussen und damit die Druckqualität negativ beeinträchtigen können. Für eine hohe Druckqualität besteht die Notwendigkeit, die Tinte auf einem entsprechend notwendigen Betriebstemperaturniveau zu halten, wobei nur kleine Temperaturschwankungen innerhalb eines engen Toleranzbereich von beispielsweise ± 1° C um die gewünschte Betriebstemperatur der Tinte herum tolerierbar sein sollen.

Aus der Offenlegungsschrift DE 10 2007 043 644 A1 ist ein Temperiergerät für Druckmaschinen bekannt, das zum Temperieren bestimmter Teile oder Fluide einer Rotationsdruckmaschine dient. Hierbei ist je ein Temperaturmittelkreis für Kaltwasser und Warmwasser vorgesehen, deren Temperaturen unabhängig voneinander steuer- und/oder regelbar sind. Um bestimmt Teile der Maschine mit einer Flüssigkeit zu temperieren, werden Warmwasser und Kaltwasser entsprechend gemischt, bis die gewünschte Temperatur erreicht ist. Dann wird das temperierte Gemisch in einen Verbraucherkreis direkt zu den entsprechenden Teilen geleitet, um diese zu kühlen oder vorzuwärmen. Nicht verbrauchte Flüssigkeit wird jeweils über einen Rücklauf zu entsprechenden Flüssigkeitsspeichern der beiden Temperierkreisläufe zurückgeführt.

Statt der hydraulischen Mischung der beiden Temperiermittelkreisläufe kann auch ein Wärmetauscher mit dem Verbraucherkreis der Druckmaschine in Verbindung stehen, wodurch die Kreisläufe gegeneinander hydraulisch getrennt sind. Somit steht der Kaltwasserkreis als Feuchtmittel dient mit den zu kühlenden Teilen in Verbindung. Das kühle Feuchtmittel wird dann direkt auf Walzen der Druckmaschine zum Kühlen aufgesprüht.

Aus der Patentschrift EP 1 870 238 B1 ist eine Kühleinrichtung für Walzen oder Druckwerkszylinder für eine Druckmaschine bekannt. Ein zu temperierender Kreis wird aus zwei Kreisen unterschiedlicher Temperatur gespeist abhängig von der Außentemperatur. Somit können Walzen oder Druckzylinder unter die Umgebung- bzw. Außentemperatur abgekühlt werden. Ein Wärmetauscher kann thermisch an einen Versorgungskreis für die Zufuhr von Temperiermittel des gewünschten Temperaturniveaus direkt mit dem zu temperierenden Bauteil gekoppelt werden. Zudem ist eine Mischung aus beiden als Temperaturmittel auf ein gewünschtes Temperaturniveau einspeisbar. Somit können sämtliche temperierende Druckwerkszylinder, Walzen, etc. in der Druckmaschine durch unmittelbaren Kontakt gekühlt werden. Die Einrichtung weist auch Wärmerückgewinnungsmittel auf, durch die Energie aus Wärmeströmen zu Heizzwecken für den Temperiermittelspeicher zurückgewonnen werden kann.

Bei den bekannten Temperiergeräten werden Bauteile der Druckmaschinen direkt durch eine Gemisch aus dem Kühlmittel und dem Wärmemittel temperiert, indem sie mit dem Gemisch in Kontakt kommen. Dabei kann es passieren, dass die Teile zu heiß oder zu kalt werden, insbesondere wenn ein Kühl-/Wärme-Aggregat ausfallen sollte. Tinte könnte mit solch einer Einrichtung nicht temperiert werden, da die Tinte mit dem Kühlmittel verwässert würde und nicht mehr brauchbar wäre.

Wird Tinte beispielsweise mit Heiß- oder Kaltleitern gekühlt oder erhitzt, so kann dies dazu führen, dass die sehr empfindliche Tinte über ihre maximal zulässige Temperatur erhitzt wird (bei der flüchtige Stoffe der Tinte verdampfen) oder gefriert (Viskosität kann zu hoch werden) im Falle einer Fehlfunktion. Da die neuesten Tinten sehr temperaturempfindlich sind, sollte diese nie über 45° C erwärmt werden. Denn bei solch hohen Temperaturen verflüchtigen sich bereits wichtige Bestandteile der Tinte. Auch sollten keine lokalen Temperaturüberhöhungen (Hotspots) mit elektronischen Heizelementen erzeugt werden, da dann die Tinte unbrauchbar wird oder zumindest ein deutlich verschlechtertes Druckbild liefern würde und das Druckbild zumindest stellenweise stark beeinträchtigt wäre.

Es ist Aufgabe der Erfindung, eine einfache Temperiervorrichtung und ein Verfahren zum Temperieren von Tinte für einen Tintendrucker zu schaffen, bei denen die zu verdruckende Tinte auf einem möglichst gleichbleibenden und spezifizierten Temperaturwert während des Druckens gehalten werden soll.

Diese Aufgabe wird für einen Temperiervorrichtung durch die Merkmale des Anspruchs 1 und für ein Verfahren durch die Merkmale des Anspruchs 9 gelöst.

So weist die Temperiervorrichtung eine Fluidquelle mit einem Temperierfluid auf, das auf eine vorbestimmte Temperatur vortemperiert und an einem Abfluss der Fluidquelle bereitgestellt wird. Eine Regeleinrichtung erhält an ihrem Eingang das Temperierfluid von der Fluidquelle. Eine Steuereinheit steuert die Durchflussmenge des zugeführten Temperierfluids abhängig von einer gemessenen Temperatur der zu temperierenden Tinte als Regelgröße und führt diese einem Fluidkreis eines Wärmetauschers zu.

Der Wärmetauscher weist den Fluidkreis mit dem Temperierfluid und ein davon getrennten Tintenkreis mit Tinte auf. Im Wärmetauscher wird Wärme vom Fluidkreis auf den Tintenkreis übertragen, um die Tinte auf eine gewünschte Solltemperatur zu temperieren. Hierzu ist ein Temperatursensor nach dem Wärmetauscher angeordnet, der die Temperatur der Tinte als Istwert misst und den Istwert an die Regeleinrichtung zurückkoppelt, um die Temperatur der Tinte auf ihre Sollgröße zu regeln. Die so temperierte Tinte wird einer Druckeinheit des Tintendruckers zugeführt.

Beim einem Verfahren zum Betreiben einer Temperiervorrichtung von Tinte für einen Tintendrucker mit einer Temperiervorrichtung wird ein Temperierfluid mit einer vorbestimmten Temperatur bereitgestellt und einer Regeleinrichtung zugeführt. In der Regeleinrichtung wird ein Volumenstrom pro Zeitdauer eingestellt. Dieses Temperierfluid wird dann in einem Wärmetauscher mit Tinte thermisch in Kontakt gebracht, um die zu druckende Tinte auf eine gewünschte Betriebstemperatur zu temperieren. Der so eingestellt Istwert der Tinte wird gemessen und zur Regeleinrichtung zurückgekoppelt. Somit wird der Volumenstrom derart geregelt, dass die Tintentemperatur den gewünschten Sollwert einnimmt.

Diese Vorrichtung und dieses Verfahren haben den Vorteil, dass die zu temperierende Tinte physikalisch getrennt von dem Temperierfluid temperiert wird und dadurch nicht "verwässert" wird. Wenn die Temperatur des Temperierfluids vorab so hoch eingestellt ist, dass sie stets kleiner als die maximal zulässige Tintentemperatur ist, so kann durch die Temperiervorrichtung selbst bei einer Fehlfunktion ein Überhitzen der Tinte vermieden werden, da ansonsten flüchtige Bestandteile der Tinte ausgedampft würden. Die Tinte kann dadurch nicht geschädigt werden.

Ferner wird für die Temperierung von unterschiedlichen Tinten nur eine einzige temperierbare Fluidquelle benötigt. Zudem hat die Temperiervorrichtung den

Vorteil, dass die Leitungslängen für das Temperierfluid keinen Einfluss auf die Genauigkeit der Regelung hat. Die Tinte kann schnell hochgeheizt werden. Für unterschiedliche Tinten können auch unterschiedliche Tintentemperaturen eingestellt werden, bei nur einer Fluidquelle. Außerdem werden relativ wenige Elektronikbauteile für die Temperaturregelung benötigt.

Vorteilhafte Ausgestaltungen der Erfindung sind durch die Unteransprüche gekennzeichnet. So ist es vorteilhaft, wenn der Wärmetauscher ein Plattenwärmetauscher ist. Denn dann kann großflächig Wärme auf die Tinte übertragen werden und der Wärmetauscher arbeitet besonders effektiv.

Das Temperierfluid kann Wasser sein, dem ggfs. Additive hinzugefügt werden, damit mit der Zeit keine Pilze oder sonstige Verunreinigungen in den Temperierfluids entstehen, die die Eigenschaften des Wassers als Temperierfluid verschlechtern. Wasser hat den Vorteil, dass es umweltfreundlich ist und in ausreichender Menge zur Verfügung steht.

Die Fluidquelle weist ein Heizelement und/oder ein Kühlelement als Temperierelemente aufweist, durch die das Temperierfluid auf eine vorbestimmte Fluidtemperatur temperiert wird. Somit kann das Temperierfluid jede beliebige, gewünschte Temperatur einnehmen, die zum Temperieren der Tinte geeignet ist.

Die Fluidquelle kann von der Wasserversorgung beim Druckbetreiber gespeist werden. So kann die Fluidquelle mit einem Warmwasseranschluss oder einem Kaltwasseranschluss verbunden sein. Allerdings sollte dann darauf geachtet werden, das die Warmwassertemperatur nicht zu heiß ist oder die Kaltwassertemperatur nicht zu kalt, auch wenn das Wasser in der Fluidquelle temperiert wird.

Somit ist die Temperiervorrichtung einfach ausgebildet und es wird nur eine einzige Fluidquelle benötigt, die ein Fluid mit einer gewünschten Temperatur für alle angeschlossenen Regeleinrichtungen mit Wärmetauscher und Teile des Tintendruckers für diese jeweilig zu druckende Tinte bereitstellt. Zum Temperieren des Fluids genügen einfache Bauteile, wie Fluidvorratsbehälter, Heizelement und/oder Kühlelement.

Besonders vorteilhaft ist es, wenn ein Temperatursensor am Tintenausgang des Wärmetauschers oder danach die Isttemperatur der Tinte vorzugsweise direkt in der Tinte (und nicht außerhalb an den Fluidleitungen) misst und den Messwert als Istwert zurück zur Regeleinrichtung führt, damit die Durchflussmenge entsprechend gesteuert/geregelt werden kann. Da der Istwert dann genauer gemessen wird, verbessert dies die Regelung bezüglich Genauigkeit und Regelgeschwindigkeit.

Wenn die Steuereinheit der Regeleinrichtung ein PI-Regler (Proportional-Integral-Regler) ist, so kann das damit gesteuerte Proportionalventil den Durchfluss durch die Regeleinrichtung (Volumenstrom pro Zeitdauer) schnell und einfach entsprechend der Differenz zwischen Istwert und Sollwert regeln.

Ausführungsbeispiele der Erfindung werden nachfolgend anhand von schematischen Zeichnungen näher erläutert. Es zeigen:
- Figur 1: ein Blockschaltbild einer erfindungsgemäßen Temperiervorrichtung,
- Figur 2: ein Blockschaltbild einer Temperiervorrichtung nach Figur 1, die mehrere Tintenkreise steuert, und
- Figur 3: ein Ablaufdiagramm für ein Verfahren zum Betreiben einer Temperiervorrichtung für Tinte für einen Tintendrucker, der eine Temperiervorrichtung nach den Figuren 1 oder 2 aufweist.

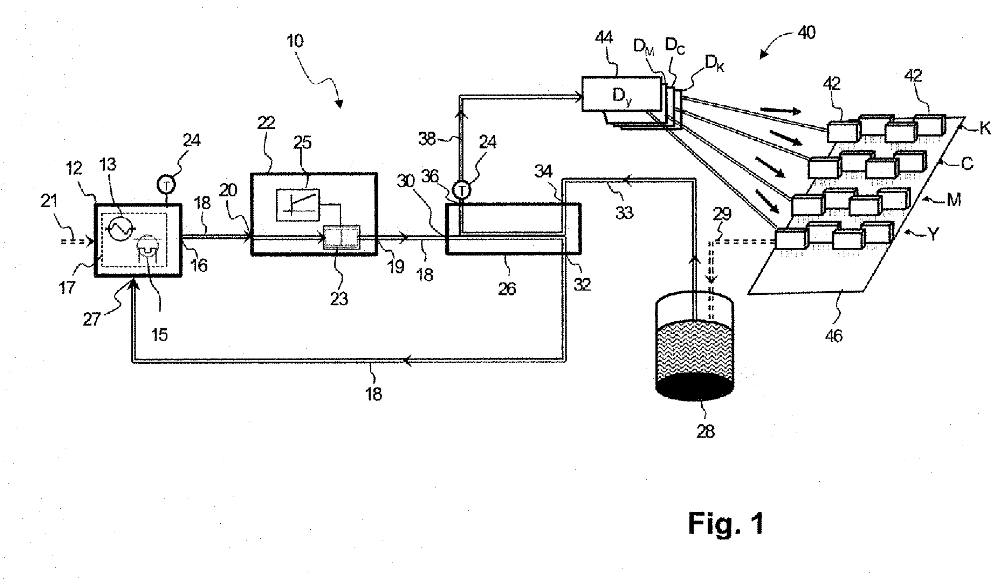

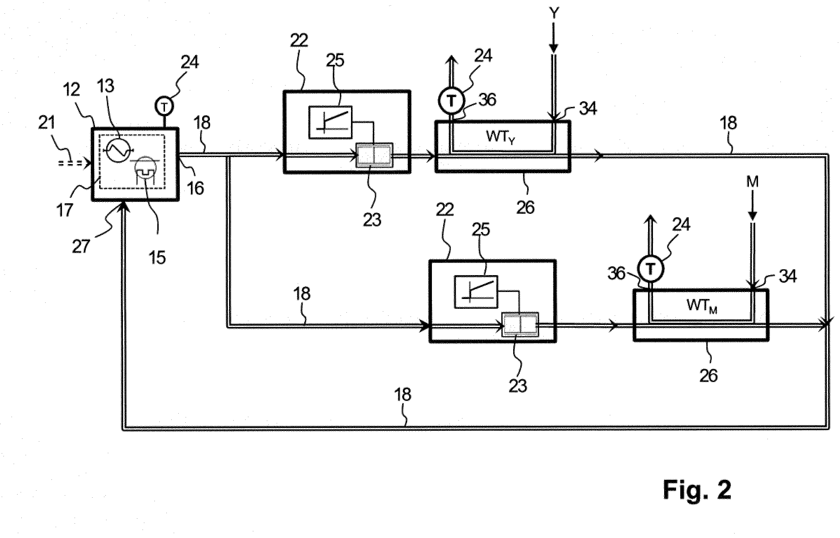

Im Folgenden wird die Erfindung anhand von mehreren Ausführungsbeispielen einer Temperiervorrichtung für einen Tintendrucker näher erläutert, der hier in Figur 1 in einem bevorzugten Ausführungsbeispiel zum vierfarbigen Drucken ausgebildet ist und in Figur 2 zum zweifarbigen Drucken. Statt Tinte können auch andere flüssige Druckfarben (das sind farbmittelhaltige Fluide, die mit Hilfe einer Druckform auf einen Bedruckstoff übertragen werden und wasser- oder ölbasiert sind mit jeweils Farbmitteln drin) verwendet werden. Selbstverständlich können auch mehr oder weniger Farben von Tinten oder Fluiden verwendet werden ohne vom Erfindungsgedanken abzuweichen. In den Figuren sind nur die wesentlichen und für die Funktionalität der Erfindung erforderlichen Komponenten näher erläutert und funktional gleiche oder identische Elemente mit denselben Bezugszeichen gekennzeichnet.

In Figur 1 ist ein erstes Ausführungsbeispiel einer Temperiervorrichtung 10 zum Temperieren von Tinte für einen Tintendrucker dargestellt. Die Temperiervorrichtung 10 weist eine Fluidquelle 12 mit einem Fluid (auch als Temperierfluid bezeichnet) auf. In der Fluidquelle 12 ist ein Fluidvorratsbehälter 17 angeordnet, in dem das Temperierfluid bevorratet ist und im Betrieb auf eine vorbestimmte Temperatur temperiert wird. Zum Temperieren des Fluids weist die Fluidquelle 12 zumindest ein Heizelement 13 und/oder zumindest ein Kühlelement 15 auf. Diese vorab eingestellte Temperatur wird vorzugsweise während des Betriebs des Tintendruckers weitgehend konstant gehalten.

Die Fluidquelle 12 weist ausgangsseitig zumindest einen Abfluss 16 auf, der über eine Fluidleitung 18 mit einem eingangsseitigen Zufluss 20 zu einer Regeleinrichtung 22 verbunden ist. Zudem weist die Fluidquelle 12 einen Rückfluss 27 auf, zu dem Temperierfluid zurück zur Fluidquelle 12 strömen kann. Darüber hinaus weist die Fluidquelle 12 einen Zuführanschluss 21 auf, über den die Fluidquelle 12 mit einem entsprechenden Fluid von außen aufgefüllt oder nach Bedarf nachgefüllt werden kann.

In der Regeleinrichtung 22 ist eine Steuereinrichtung mit einem Regler 25 und einem steuerbaren Ventil (hier ein Proportionalventil 23) angeordnet. Der Regler 25 steuert die Durchflussmenge pro Zeitspanne des Proportionalventils 23 abhängig von einer gemessenen Tintentemperatur (diese wird auch als Isttemperatur oder Istwert bezeichnet). Ziel der Regelung ist es, die Tinte auf Betriebstemperatur oder Solltemperatur zu bringen durch Rückmelden der Isttemperatur und Vergleich mit der Solltemperatur. Die Betriebstemperatur wird zum Drucken mit dem Tintendrucker für ein optimales Druckbild benötigt. Die optimale Betriebstemperatur der Tinte ist vom Hersteller spezifiziert.

Die entsprechende Menge an Temperierfluid, das auf fester, vorbestimmter Fluidtemperatur eingestellt ist, wird über einen Ausgang 19 und eine Fluidleitung 18 einem der Regeleinrichtung 22 nachfolgenden Wärmetauscher 26 zugeführt.

Der Wärmetauscher 26 weist ein Fluidkreis und einen Tintenkreis auf. Das Temperierfluid strömt von der Regeleinrichtung 22 kommend eingangsseitig über einen Fluideintritt 30 mit einem entsprechenden Volumenstrom (Menge pro Zeitdauer) durch den Fluidkreis und wird dann zurück zur Fluidquelle 12 geführt. Die zu temperierende Tinte strömt im Tintenkreis von einem Tintenvorratsbehälter kommend durch einen Tinteneintritt 34 durch den Wärmetauscher 26 und wird ausgangsseitig über einen Tintenaustritt 36 des Wärmetauschers 26 einer Druckeinheit 40 zum Verdrucken der Tinte zugeführt.

Fluidkreis und Tintenkreis sind physisch (körperlich) voneinander getrennt, beispielsweise durch eine thermisch leitende Wand, Wandung oder Abtrennung. Sie stehen aber über die Wand (nicht explizit in den Figuren dargestellt) in thermischen Kontakt miteinander, so dass thermische Energie des Temperierfluids über die Wand auf die Tinte des Tintenkreises übertragen wird. Durch entsprechende Regelung des Volumenstroms pro Zeitdauer des den Wärmetauscher 26 durchströmenden Temperierfluids wird die Tinte infolge der Wärmeübertragung temperiert. Erst wenn die Tinte ihre Solltemperatur erreicht hat, sollte sie verdruckt werden, um eine entsprechend gute Druckqualität des Druckbildes zu erreichen.

Zum Regeln der Tintentemperatur wird zumindest ein Temperatursensor 24 benötigt, der den Istwert der Tinte an oder nach dem Tintenaustritts 36 des Wärmetauschers 26 misst. Der Istwert wird hierzu an die Regeleinrichtung 22 zurückgekoppelt (elektrische Rückkopplungsleitungen sind der Übersichtlichkeit halber nicht in Figur 1 dargestellt).

Die Tinte kann über einen Tintenvorratsbehälter 28 oder einen Backpressuretank (nicht explizit in der Fig. 1 dargestellt) dem Wärmetauscher 26 über eine Tintenleitung 33 zugeführt werden. Die beim Bedrucken nicht verbrauchte Tinte kann auch von der Druckeinheit 40 zurückgeführt werden zu dem Tintenvorratsbehälter 28, was in der Figur 1 durch eine gestrichelte Rückführleitung 29 dargestellt ist. Solange die Tinte noch nicht auf Betriebstemperatur ist, kann sie auch - ohne zu drucken - in einem Kreislauf zur Druckeinheit 40 geführt werden und von dort an den Druckköpfen 42 vorbei zurück zum Tintenvorratsbehälter 28.

Bevor die Tinte den Wärmetauscher 26 erreicht, kann sie bereits in dem Tintenvorratsbehälter 28 oder Backpressuretank vortemperiert werden und/oder auch entgast werden, was insbesondere für eine gute Druckqualität eine große Rolle spielt. Wenn sie nicht vortemperiert ist, stellt sich als Tintentemperatur die herrschende Umgebungstemperatur für die Tinte im Tintenvorratsbehälter 28 ein. Für eine schnellere Regelung, insbesondere beim Anfahren/Hochfahren des Tintendruckers, ist eine Vortemperierung von Vorteil, da dann die Regelung auf Betriebstemperatur schneller geht. Die Vortemperierung der Tinte kann relativ grob erfolgen, da die genaue Solltemperatur der Tinte durch die Regelung eingestellt wird.

Die Druckeinheit 40 kann einen Distributionstank 44 aufweisen, in dem die zugeführte und temperierte Tinte vor dem Drucken zwischengespeichert wird. Von dem Distributionstank 44 aus wird die Tinte einem oder mehreren Druckköpfen 42 zugeführt, die dann einen Aufzeichnungsträger 46 bedrucken können. Der Distributionstank 44 kann auch am oder in den Gehäusen der Druckköpfe 42 integriert sein. Ebenso kann in den Druckköpfen 42 eine Entgasungseinrichtung enthalten sein, die die Tinte (ggfs. zusätzlich oder erneut) entgast.

Für jede Tintenfarbe ist vorteilhafterweise eine eigene Regeleinrichtung 22 und ein damit verbundener Wärmetauscher 26 vorhanden, wie es in der Figur 2 dargestellt ist (dort die Wärmetauscher WT_{Y} und WT_{M} für die gelbe und magenta Tinte. Vorteilhafterweise ist nur eine einzige Fluidquelle 12 vorhanden, über die dann alle verwendeten Tintenfarben mit Hilfe jeweils einer eigenen Regeleinrichtung 22 und nachfolgendem Wärmetauscher 26 temperiert werden können. Somit wird jede Regeleinrichtung 22 und indirekt jeder nachfolgende Wärmetauscher 26 mit dem Temperierfluid der einzigen Fluidquelle 12 gespeist und somit die jeweilige Tinte temperiert. Falls die Tinten unterschiedliche Betriebstemperaturen haben sollten, so kann dies durch die jeweilige Steuereinrichtung bewerkstelligt werden.

Jede Regeleinrichtung 22 könnte auch an eine eigene Fluidquelle 12 angeschlossen sein. Allerdings wäre dies ein erhöhter Bauteileaufwand, der daher vermieden wird.

Die Fluidquelle 12 ist vorteilhafterweise in dem Gehäuse des Tintendruckers integriert eingebaut. Allerdings kann die Fluidquelle 12 auch außerhalb des Tintendruckers angeordnet sein, wobei dann entsprechende Fluidleitungen zu einem Zuführanschluss für den Tintendrucker führen.

Als Heizelemente 13 können herkömmliche Heizelemente wie beispielsweise eine Heizspirale verwendet werden, die um eine Leitung herum verläuft und das durchströmende Fluid erwärmt. Oder ein Heißleiter, der direkt im Fluid angeordnet ist und dieses auf eine gewünschte Temperatur aufwärmt, falls die Fluidquelle 12 mit einem Fluid gefüllt ist, das zuvor auf einem kühleren Temperaturniveau lag, als die gewünschte Temperatur. Dies ist beispielsweise bei Zufuhr von Frischwasser der Fall, das in der Regel etwa eine Temperatur von 10° - 14° C hat.

Als Kühlelemente 15 können herkömmliche Kühlelemente 15, wie Kühlaggregate, Kaltleiter oder Kühlkompressoren verwendet werden, die das Fluid in der Fluidquelle 12 auf eine gewünschte Temperatur kühlt, falls die Fluidquelle 12 mit einem Fluid gefüllt ist, das zuvor auf einem wärmeren Temperaturniveau lag, als die gewünschte Temperatur. Dies ist beispielsweise bei Zufuhr von Warmwasser der Fall, das in der Regel eine Temperatur von über 45° C hat.

Als Temperierfluid kann jedes geeignete Fluid verwendet werden, sei es Gas oder eine Flüssigkeit, die die Wärme beim Transport/Strömen durch entsprechende Leitungen gut leiten können. Vorzugsweise wird Wasser verwendet, das sehr umweltverträglich ist und ausreichend zur Verfügung steht. Dem Wasser können bestimmte Additive, wie beispielsweise Chemikalien wie Fungizide oder Biozide zugefügt sein, um eventuell die Wärmeleitung beeinträchtigende Einwirkungen wie beispielsweise durch Pilzbefall oder Algenbildung zu verhindern. Die Fluidquelle 12 kann auch mit einem eigenen Hauswasseranschluss des Betreibers, bei dem der Tintendrucker steht, mit Wasser versorgt werden. Dabei wird dann das entnommene Leitungswasser (dies kann das Kaltwasser oder das Warmwasser sein) dem Fluidvorratsbehälter 17 der Fluidquelle 12 zugeführt. Dort wird dann das Wasser entsprechend den Anforderungen an die Vortemperierung des Temperierfluids temperiert.

Die Temperatur der Temperierfluids wird dabei vorab so eingestellt, dass seine Temperatur höher ist als die Betriebstemperatur der Tinte und etwa gleich oder niedriger ist als die maximal zulässige Tintentemperatur. Das Temperierfluid braucht nicht hochgenau temperiert zu sein, da die genaue Einstellung/Regelung der Tintentemperatur durch den Regelkreis mit Regeleinrichtung 22 und Wärmetauscher 26 bewerkstelligt wird. Vorzugsweise wird das Temperierfluid beim Hochfahren des Tintendruckers oder nach einer Druckpause auf seine vorbestimmte Fluidtemperatur gebracht. Vorteilhaft ist es, wenn dann noch nicht gedruckt wird, da mehr Regelaufwand nötig wäre, um mit dem zu kühlen Temperierfluid die Tinte zu temperieren. Sobald das Fluid seine vorbestimmte Fluidtemperatur erreicht hat und vorzugsweise dann auch noch die Tinte ihre Betriebstemperatur erreicht hat, kann mit dem Drucken begonnen werden.

Wenn die vom Hersteller der Tinte spezifizierte Betriebstemperatur der Tinte beispielsweise 32° betragen sollte (ideale Temperatur der Tinte zum Erzielen einer optimalen Druckqualität) und die spezifizierte, maximal zulässige Temperatur der Tinte nicht 40° C übersteigen sollte, so kann die Temperatur des Fluids in der Fluidquelle 12 beispielsweise auf etwa 35° C bis etwa 42° C eingestellt werden. Somit kann die Tintentemperatur selbst bei Ausfall der Regelung der Regeleinrichtung 22 kaum über 40° C durch den Wärmetransfer im Wärmetauscher 26 steigen, da die Temperatur des Fluids auf dem Weg bis zum Wärmetauscher 26 etwas an Wärme verliert und die Tinte durch die Volumenstromsteuerung und den Wärmetransfer im Wärmetauscher 26 temperiert wird, aber nicht durch eine eigene Heizeinrichtung erhalten wird. Diese Anfangstemperatur des Fluids (hier von etwa 35° C bis etwa 42° C) sollte von Beginn der Regelung an bereitstehen, damit die Regelung gut und schnell funktioniert.

Da die Fluidtemperatur um einige Grad höher ist als die Betriebstemperatur der Tinte, wird ein großer Regelbereich/Variationsbereich geschaffen für die Temperierung der Tinte. D.h. die Tinte kann je nach Anforderung und Spezifikation in einem möglichst großen Bereich durch diese Volumenstromregelung eingestellt werden. Somit kann bei Verwendung einer anderen Tinte mit einer ähnlichen (aber davon verschiedenen) Betriebstemperatur dieselbe Temperiervorrichtung 10 verwendet werden, ohne dass die Bestandteile der Temperiervorrichtung 10 geändert oder die Fluidquelle 12 ausgetauscht werden müsste. Es können also viele unterschiedlich Tinten mit der Temperiervorrichtung 10 benutzt werden.

Die Regelung der Tintentemperatur hängt dabei von der Isttemperatur der Tinte und der Differenz zur Solltemperatur ab. Wenn der Unterschied zwischen der gemessenen Isttemperatur und der Solltemperatur groß ist (wie es beim Aufheizen anfangs der Fall ist), ist der Volumenstrom (auch als Durchflussrate oder Durchflussmenge bezeichnet) pro Zeitspanne des durch das Proportionalventil 23 geförderten Temperierfluids größer. Damit steht - bei gleichbleibender Temperatur des Fluids - mehr Energie im Wärmetauscher 26 zum Erwärmen der Tinte und damit zum schnelleren Erwärmen der Tinte zur Verfügung. Je näher sich die Isttemperatur an die Solltemperatur annähert, desto kleiner kann der Volumenstrom werden, da dann weniger thermische Energie benötigt wird. Der Volumenstrom wird dabei von dem Proportionalventil 23 abhängig von Istwert und Sollwert sowie der Soll-Istwert-Differenz gesteuert. Dabei wird die Isttemperatur gemessen und die Solltemperatur ist je nach Tinte vorgegeben.

Vorzugsweise kann als Regler 25 ein PI-Regler (Proportional-Integral-Regler) verwendet werden, wie er hinlänglich aus der Regelungstechnik bekannt ist. Dabei wirkt der in den Regelkreis eingebundene Regler 25 so auf das Proportionalventil 23 ein, dass die durchströmende Menge an Temperierfluid pro Zeitdauer entsprechend der Differenz von Sollwert und Istwert geändert (geregelt) wird. Selbstverständlich können auch andere geeignete Regler 25, wie P-Regler, PID-Regler, usw. verwendet werden, um den erforderlichen Volumenstrom über das Proportionalventil 23 einzustellen.

Bei der Temperiervorrichtung 10 wird die Temperatur des Temperierfluids vorzugsweise nach der Fluidquelle 12 nicht mehr geändert. Da die Regeleinrichtung 22 die vorab eingestellte Temperatur des Temperierfluids kennt, kann dann der Volumenstrom entsprechend abhängig von der Soll-Istwert-Differenz eingestellt werden. Falls sehr lange Leitungen 18 zwischen Fluidquelle 12 und Regeleinrichtung 22 vorhanden sein sollten, auf denen ein Wärmeverlust des Temperierfluids eintritt, kann einerseits die Fluidtemperatur in der Fluidquelle 12 entsprechend erhöht werden oder eine entsprechende Korrektur der Temperatur des Temperierfluids durch ein Heizelement 13 oder Kühlelement 15 vorgenommen werden.

Für die Regelung wird vorzugsweise die Temperatur der Tinte am oder nach dem Tintenaustritt 36 des Wärmetauschers 26 gemessen und für die Regelung zum Regler 25 zurückgemeldet. Allerdings sollte der Strömungsweg bis zum Druckkopf 42 relativ kurz sein und die Tinte entlang des Weges nicht zu viel Wärmeverlust erleiden. Alternativ könnte die Solltemperatur um einen Korrekturfaktor höher festgesetzt sein, um bedingt durch die Wärmeverluste die korrekte Betriebstemperatur der Tinte bei den Druckköpfen 42 zu erreichen.

Wenn generell die Isttemperatur der Tinte möglichst nahe am "Verbrauch", d.h. direkt in der Druckeinheit 40 und vorzugsweise direkt am Druckkopf 42 (gegebenenfalls auch zusätzlich) gemessen wird, ist die Genauigkeit der Regelung am größten. Um Tinte auf Betriebstemperatur der Druckeinheit 40 möglichst unverändert oder kaum verändert bereitzustellen, sollten die Leitungswege der Tinte von dem Wärmetauscher 26 zu der Druckeinheit 40 und dort bis zum Druckkopf 42 möglichst kurz gehalten werden und vorzugsweise thermisch isoliert sein. D.h. der Wärmetauscher 26 sollte vorteilhafterweise relativ nahe an der Druckeinheit 40 angeordnet sein. Ansonsten sollten die tatsächlichen Wärmeverluste entlang der Tintenleitung 38 bei der Regelung der Solltemperatur als Korrekturfaktor mit berücksichtigt werden. In einem solchen Fall müsste die Solltemperatur am Tintenaustritt 36 des Wärmetauschers 26 um den Korrekturfaktor höher eingeregelt werden als die tatsächlich in der Druckeinheit 40 benötigte und gewünschte Temperatur der Tinte. Aber vorzugsweise wird die Isttemperatur möglichst nahe beim "Verbrauch" gemessen, um eine möglichst genaue Regelung zu erreichen.

Der Wärmetauscher 26 (auch als Wärmeübertrager bezeichnet) ist eine Vorrichtung, die thermische Energie von dem durch den Wärmetauscher 26 strömende Temperierfluid auf die durch den Wärmeübertrager strömende Tinte überträgt. Der Wärmetauscher 26 wird also von zwei Stoffströmen (Temperierfluid und Tinte) durchströmt, um einen der beiden Stoffströme auf einen vorgegebenen thermodynamischen Zustand infolge von Wärmeübertragung durch den anderen Stoffstrom zu bringen. Die von dem Temperierfluid abgegebene und von der Tinte aufgenommene thermische Leistung wird dabei regelnd ausgenutzt, um die Temperatur der Tinte auf einen gewünschten Sollwert zu regeln. Dabei wird die Wärme vom wärmeren Stoffstrom abgegeben und vom kälteren Stoffstrom aufgenommen.

Der Wärmetauscher 26 kann auf vielfältige Weise ausgestaltet werden, vorausgesetzt es sind zwei physikalisch getrennte Stoffströme (Temperierfluid und Tinte) vorhanden, über die thermische Energie von einem Stoffstrom zum anderen übertragen wird. So kann das Temperierfluid in die gleiche Richtung wie die Tintenstrom strömen oder auch entgegengesetzt (wie es in der Figur 1 dargestellt ist).

Es gibt auch die Möglichkeit, dass sich die Stoffströme kreuzen oder ein Stoffstrom spiralförmig um den andern mithilfe einer entsprechenden Leitung geführt wird. Wesentlich ist, dass die beiden Stoffströme durch eine gut thermisch leitende Wand und durch ein entsprechendes Bauteil physisch (körperlich) voneinander getrennt sind, so dass der Wärmetransfer gut stattfinden kann, aber die Tinte nicht durch das Temperierfluid verunreinigt oder verwässert wird. Auch sollte die Wärmeübertragung möglichst effektiv sein, damit die Temperatur der Tinte am Tintenaustritt 36 des Wärmetauschers 26 oder danach möglichst genau auf den gewünschten Wert (Solltemperatur der Tinte) eingestellt werden kann.

Vorzugsweise ist der Wärmetauscher 26 als Plattenwärmetauscher ausgebildet, bei dem die thermische Energie über die gut thermisch leitende Wand übertragen wird. Dabei sind die beiden Stoffströme nicht in direktem Kontakt, sondern räumlich (physisch, körperlich) durch die wärmedurchlässige Wand getrennt. Die Wand oder Wandung, die die beiden Stoffströme trennt, sollte eine gute Wärmeleitfähigkeit und eine große Oberfläche aufweisen, damit die thermische Energie möglichst effektiv übertragen werden kann. Je großflächiger die Platten ausgebildet sind, je thermisch leitfähiger die Wand dazwischen ausgebildet ist und je dünner die Wand ist, desto effektiver ist die Wärmeübertragung. Vorzugsweise sind die fluid- und tintenleitenden Teile des Plattenwärmetauschers aus korrosionsfreiem Stahl hergestellt.

Die so temperierte Tinte wird der Druckeinheit 40 zugeführt. Diese kann einen Distributionstank 44 aufweisen, der die Tinte an ein oder mehrere Druckköpfe 42 verteilt, mit denen jeweils dieselbe Tinte verdruckt wird. Distributionstank 44 und ggfs. Entgasungseinheit (nicht dargestellt) können auch in der Druckkopfeinheit selber angeordnet sein.

Für jede Druckfarbe (z.B. eine Tinte mit einer bestimmten Farbe) ist eine eigene Temperiervorrichtung 10 vorgesehen, die dann die entsprechende Tinte an die entsprechenden Druckköpfe 42 weiterleitet, damit auch diese Farbe mit entsprechenden Druckköpfen 42 verdruckt werden kann. Denn jede Tinte hat in der Regel ihre eigene Solltemperatur/optimale Betriebstemperatur, bei der eine optimale Druckqualität erzielt wird. Allerdings genügt es, wenn alle Steuereinrichtungen 22 von derselbe Fluidquelle 12 mit demselben vortemperierten Temperierfluid gespeist werden.

Die Leitungswege zwischen dem Regeleinrichtung 22 und dem Wärmetauscher 26 als auch zwischen dem Wärmetauscher 26 und dem Distributionstank 44 sollten relativ kurz sein, damit entlang der Fluidleitungen 18 und der Tintenleitungen 38 möglichst wenig Wärmeverluste entstehen, die die Genauigkeit der Regelung der Tintentemperatur (Solltemperatur) beeinträchtigen würde, und/oder sollten thermisch isoliert sein. Da jedoch die Isttemperatur der Tinte gemessen und auf Solltemperatur geregelt wird, spielen die Leitungslängen eine untergeordnete Rolle, sofern die Isttemperatur nahe beim "Verbrauch" gemessen wird. Es besteht eben nur ein höherer Regelungsbedarf. Dies kann bei großen Leitungslängen länger dauern bis die Betriebstemperatur der Tinte erreicht ist, da mehr Energie wegen der höheren Energieverluste aufgewendet werden muss.

Die Strömungswege der Stoffströme (Temperierfluid und Tinte) sind durch entsprechende Leitungen 18, 33, 38 vorgegeben. Die Leitungen 18, 33, 38 können rohrförmig ausgebildet sein und aus Metall, Kunststoff oder sonstig geeigneten Materialien, wie Verbundstoffen bestehen. Sie sollten zudem korrosionsfrei sein. Die Stoffströme fließen dabei entsprechend in die Richtung in den Leitungen 18, 33, 38, wie sie durch die Pfeile in den Figuren 1 und 2 dargestellt sind.

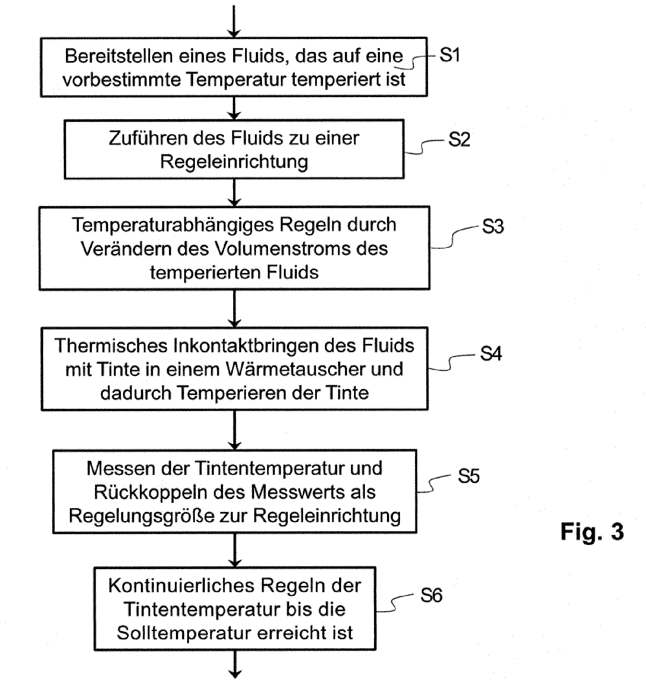

In Figur 3 ist ein Ablaufdiagramm eines Verfahrens zum Betreiben einer Temperiervorrichtung 10 dargestellt, wie sie in Zusammenhang mit Figur 1 beschrieben wurde. Dabei wird zunächst im Schritt S1 ein Temperierfluid auf einer vorab definierten, weitgehend konstanten Temperatur zur Verfügung gestellt. Das Temperierfluid wird im Schritt S2 einer Regeleinrichtung 22 zugeführt, das einen Volumenstrom pro Zeitspanne abhängig von einer gemessenen Isttemperatur und der Differenz zu einer Solltemperatur regelt, um die Tinte auf eine gewünschte Temperatur (Solltemperatur) zu bringen und dort zu halten (im Schritt S3).

Das Temperierfluid wird im Schritt S4 einem Wärmetauscher 26 zugeführt, wo es thermisch in Kontakt gebracht wird mit der zu bedruckenden Tinte, die ebenfalls durch den Wärmetauscher 26 strömt. Dabei wird thermische Energie vom Temperierfluid auf die Tinte übertragen. Die Höhe der thermischen Energie ist abhängig von der Durchflussmenge von Temperierfluid, das dem Wärmetauscher 26 zugeführt wird.

Beim Regeln wird die tatsächliche Tintentemperatur (Istwert) ständig oder intermittierend gemessen und der Istwert wird zur Regelung zur Regeleinrichtung 22 zurückgekoppelt (Schritt S5). Dort wird dann im Schritt S6 der Volumenstrom regelnd so lange und abhängig von der Soll-Istwert-Differenz kontinuierlich verändert, bis der Istwert den Sollwert der Tintentemperatur erreicht. Danach wird weitergeregelt, um den Sollwert weitgehend zu halten. Die vorgenommenen Änderungen des Volumenstroms sind dann geringer. In diesem Zustand kann mit dem eigentlichen Drucken begonnen werden.

Durch die Wärmeübertragung vom Temperierfluid auf die Tinte wird die Tinte temperiert. Ziel ist es, am Ausgang des Wärmetauschers 26 eine gewünschte Temperatur der Tinte zu erhalten, die bereits der Solltemperatur entspricht oder nahe dran ist. Hierzu wird der Volumenstrom solange verändert und weiter geregelt, bis die gewünschte Solltemperatur der Tinte erreicht ist. Solange die Differenz zwischen Istwert und Sollwert der Tintentemperatur noch groß ist, wird ein größerer Volumenstrom benötigt (d.h. mehr Energie zur Verfügung gestellt), während später, wenn der Sollwert erreicht ist, wird nur noch ein kleinerer Volumenstrom (d.h. weniger Energie) benötigt, um den Sollwert aufrecht zu erhalten. Somit nimmt der Regelaufwand nach dem Hochtemperieren der Tinte ab.

Mit dieser Temperiervorrichtung 10 ist es möglich, jede Solltemperatur von jeder individuellen Druckfarbe einzustellen. Eingangsseitig ist nur eine Fluidquelle 12 mit einem vortemperierten Temperierfluid notwendig ist, dessen Temperatur größer ist als der gewünschte Sollwert der Tintentemperatur.

Die Genauigkeit der Temperatureinstellung der Solltemperatur hängt dabei im Wesentlichen von der Regelung des Volumenstroms des Temperierfluids ab. Die genaue Einhaltung des Temperaturniveaus des eingangsseitigen Temperierfluids in der Fluidquelle 12 ist dabei von untergeordneter Bedeutung, da die eigentliche genaue Temperatureinstellung durch die Regeleinrichtung 22 erfolgt durch Rückkopplung der gemessenen Tintentemperatur und Vergleich zur Solltemperatur. D.h. das Temperaturniveau der eingangsseitigen Fluidquelle muss nicht hoch genau sein und kann auch leicht schwanken.

Mit dieser Temperiervorrichtung 10 kann die Tinte nur erwärmt werden. Je schneller die Tinte auf Solltemperatur gebracht wird, desto kürzer ist die Wartezeit oder Verzögerung, bis mit dem Drucken begonnen werden kann. Daher ist es wichtig, dass die vorbestimmte Fluidtemperatur einige Temperaturgrade höher ist. Anfänglich erwärmt dann ein größerer Volumenstrom pro Zeitdauer schneller die Tinte. Danach nimmt die Regeltätigkeit stetig ab, d.h. die Änderungen des Volumenstroms werden kleiner, bis die Solltemperatur erreicht ist. Im eingeschwungenen Zustand muss nur noch ganz wenig geregelt werden, da die Tinte nur noch auf Solltemperatur gehalten werden muss.

Die Temperatursensoren 24 als solche sind hinlänglich bekannt. Zum Messen von Temperaturen von Fluids können alle geeigneten Temperatursensor 24 wie Heißleiter (NTC), Kaltleiter (PTC), Thermoelemente, Peltierelemente, usw. verwendet werden, die ein elektrisches Signal als Maß für die Temperatur liefern. Vorzugsweise wird die Temperatur eines Fluids direkt in dem Fluid gemessen. Wird die Temperatur außen an der Fluidleitung 18 gemessen, so kann der Messwert etwas von der Fluidtemperatur abweichen. Es müsste also eine kleine Korrektur vorgenommen werden, um in diesem Fall die gemessene Temperatur für die Regelung zu verwenden. Es können mehrere Temperatursensoren 24 vorhanden sein, die die Tintentemperatur messen und den Istwert an die Regeleinrichtung 22 zurückkoppeln.

Bei dem Ausführungsbeispiel nach Fig. 1 wird die Isttemperatur der Tinte am Ausgang des Wärmetauschers 26 oder kurz danach gemessen, wobei der Temperatursensor 24 die Temperatur am genauesten direkt innerhalb des Fluids misst. Die Temperatur der Tinte kann auch in den Druckköpfen 42 gemessen werden. Dies hat den Vorteil, dass die Temperatur auch dort gemessen wird, wo sie tatsächlich vorhanden sein soll. Somit kann die Regelung genauer werden. In allen Fällen wird ein gemessener Temperaturwert (Istwert) zur Regeleinrichtung 22 zurückgekoppelt und dort wird aus der Differenz zwischen Istwert und Sollwert der Volumenstrom entsprechend eingestellt.

Die erfindungsgemäße Temperiervorrichtung 10 benötigt lediglich eine Fluidquelle 12, in der eine Fluidtemperatur vorab eingestellt wird, die größer ist als die spezifizierte Betriebstemperatur der Tinte. Die aktuelle Isttemperatur der Tinte im Vorratsbehälter 28 hängt von der Umgebungstemperatur ab. Nach dem Einschalten des Tintendruckers muss die Tinte zunächst durch die Regelung mit der Temperiervorrichtung 10 auf Betriebstemperatur gebracht werden und dann während des Betriebs annähert bei Betriebstemperatur gehalten werden. Vorteilhaft ist es auch, die Tinte im Tintenvorratsbehälter 28 schon auf eine bestimmte Temperatur unterhalb der Solltemperatur vor zu erwärmen, damit die Tinte schneller auf Betriebstemperatur geregelt werden kann.

Unter dem Begriff "Tinte" sind generell "Druckfarben" zu verstehen, die farbmittelhaltige Temperierfluide sind und mit denen ein Bedruckstoff (Aufzeichnungsträger 46) zum Erzeugen des Druckbilds und damit eines Druckguts mithilfe von Druckköpfen 42 bedruckt wird. Vorzugsweise werden wasserbasierte Druckfarben, wie wässrige Tinten verwendet. Es können aber auch andere, nichtwasserbasierte Druckfarben verwendet werden.

Der Begriff "Farbe" betrifft nur die eigentlich Farbe des Farbmittels, wie zum Beispiel die häufig in der Drucktechnik verwendeten Farben YMCK (Yellow, Magenta, Cyan, Black) oder RGB (Rot, Gelb, Blau) zusammen mit Schwarz.

Der Begriff "Bedruckstoff" bezeichnet das Grundmaterial, auf das gedruckt wird. Der Bedruckstoff kann aus Papier, Kunststoffen (Polymeren) oder sonstigen geeigneten Materialen oder Mischmaterialien bestehen.

Jede Tinte weist einen Wert für die Betriebstemperatur auf, der bereits vom Hersteller spezifiziert wurde, und der die optimale Temperatur für den Druckbetrieb darstellt. Dieser Wert kann auch als Sollwert bezeichnet werden. Auf diesen Wert sollte die Tinte im Druckbetrieb temperiert sein, um eine optimale Druckqualität des Druckbild zu erhalten. Der Hersteller spezifiziert auch einen engen Toleranzbereich, innerhalb dessen noch eine zulässige Abweichung der Tintentemperatur möglich ist ohne dass es Einbußen bei der Druckqualität gibt. Die Tinte sollte also auf den Sollwert temperiert werden und dort auch (innerhalb des Toleranzbereichs) während des Druckens gehalten werden. Abweichungen innerhalb des Toleranzbereichs sind unbedenklich für die Druckqualität. So kann der spezifizierte Temperaturwert beispielsweise 32° C betragen mit einem Toleranzbereich von etwa ± 1° C.

Des Weiteren spezifiziert der Hersteller der Tinte auch eine Maximaltemperatur, die die Tinte nicht überschreiten sollte, damit sie nicht geschädigt wird.

Durch die Regelung mit der Temperiervorrichtung 10 wird die Tinte anfangs schnell auf Betriebstemperatur gebracht und dann weitgehend auf diesem Niveau gehalten, selbst wenn die Temperatur des Fluids in der Fluidquelle 12 etwas schwanken sollte.

Generell soll keine Schädigung der Tinte durch Überhitzen oder Unterkühlen eintreten, auch nicht wenn die Regeleinrichtung 22 oder der Wärmetauscher 26 zumindest teilweise ausfallen sollte oder gestört sind. Daher wird das Fluid vorab auf einen Temperaturwert größer als die gewünschte Betriebstemperatur, aber nicht größer als die maximal zulässige Tintentemperatur eingestellt. Infolgedessen kann die Tintentemperatur nie auf eine höhere Temperatur als die maximal zulässige Temperatur steigen.

Druckeinheiten eines Tintendruckers sind hinlänglich bekannt und brauchen hier nicht näher erläutert zu werden. Für die Erfindung spielt die Art und Weise des Aufbringens der Tinte und die Art des Bedruckstoffs eine untergeordnete Rolle.

Der PI-Regler 25 (engl. proportional-integral controller) besteht aus den Anteilen eines P-Gliedes (Proportionalglied) und eines I-Gliedes (Integralglied) mit einer Zeitkonstanten. Er kann sowohl aus einer Parallelstruktur oder aus einer Reihenstruktur definiert werden. Es können selbstverständlich auch andere geeignete Regler 25 verwendet werden, die abhängig vom aktuellen Istwert der Tintentemperatur den Volumenstrom durch den Fluidkreis des Wärmetauschers 26 hindurch so regeln, dass schon nach möglichst kurzer Zeit die gewünschte Betriebstemperatur/Solltemperatur der Tinte erreicht und auf diesem Niveau gehalten wird. Dies geschieht durch eine Regelung, die den Volumenstrom pro Zeitspanne so steuert, dass letztendlich die Solltemperatur erreicht und gehalten wird.

Ein "Fluid" ist eine zusammenfassende Bezeichnung für Flüssigkeiten, Gase und Plasmen. Durch Wärmeleitung kann mittels eines Fluids eine thermische Energie im Wärmetauscher 26 übertragen werden. Dabei gibt der Volumenstrom (oder Durchflussrate/Durchflussmenge) an, wie viel Volumen eines Fluids pro Zeitspanne durch einen festgelegten Querschnitt transportiert wird. Durch entsprechendes Verändern des Volumenstroms des Temperierfluid wird der Wärmetransfer im Wärmetauscher 26 gesteuert. Der Volumenstrom kann durch ein entsprechend steuerbares Ventil (vorteilhafterweise ein Proportionalventil 23) einfach und schnell je nach Bedarf verändert werden.

In Figur 1 ist eine Temperiervorrichtung 10 nur für die Farbe Gelb (Y) mit seinem Distributionstank 44 (D_{y}) dargestellt. Für die anderen Grundfarben Magenta (M), Cyan (C) und schwarz (K) sind nur stellvertretend der jeweilige Distributionstank 44 (hier D_{M}, D_{C} und D_{K}) mit den zugehörigen Zuführungsleitungen zu den Druckriegeln (hier vier Druckköpfe 42 in einer Reihe pro Farbe) dargestellt. Selbstverständlich können auch mit anderen Grundfarben wie RGB (Rot, Gelb, Blau sowie Schwarz) gedruckt werden. Ebenso können weitere Farben oder andere Flüssigkeiten, wie Funktionsflüssigkeiten mit den Druckköpfen 42 verdruckt werden, wobei für jede dieser Tinten ein eigener Wärmetauscher 26 vorhanden ist, da sich ansonsten die Tinten vermischen würden.

In Figur 2 ist die Temperiervorrichtung 10 für eine gelbe (Y) und magentafarbene (M) Tinte stellvertretend für eine Vielzahl von zu druckenden Tinten dargestellt.

Dabei wird zum Regeln der Tintentemperatur der verschiedenen Tinten nur eine einzige Fluidquelle 12 benötigt, in der das vortemperierte Fluid für die Regeleinrichtungen 22 mit nachfolgenden Wärmetauschern 26 (WT_{Y} für die gelbe Tinte und WT_{M} für die Magenta-Tinte) bereitgestellt wird. Das Temperierfluid wird nach den jeweiligen Wärmetauschern 26 zurück zu der Fluidquelle 12 geleitet, wo es wieder auf die vorab eingestellte Fluidtemperatur temperiert wird.

Die Zusammensetzung der Tinten und Druckfarben selber sind für die Erfindung zweitrangig, da im Wesentlichen der Aspekt der spezifizierten Betriebstemperatur der zu druckende Flüssigkeit einzuhalten ist, unabhängig von deren Zusammensetzung, auch wenn die Zusammensetzung auf die spezifizierte Temperatur der zu druckenden Flüssigkeit Einfluss hat. Zudem ist gegebenenfalls noch die maximal zulässige Temperatur der jeweiligen Tinte für die Vorabeinstellung der Fluidtemperatur zu beachten

Ein "Wärmetauscher" oder" Wärmeübertrager" ist eine Vorrichtung, die thermische Energie von einem Stoffstrom auf einen anderen überträgt. Die möglichen konstruktiven Ausgestaltungen von Wärmetauschern 26 als solche sind hinreichend bekannt und brauchen hier nicht näher beschrieben zu werden. Der Wärmetauscher 26 wird in seiner Grundfunktion jeweils von zwei Fluiden durchströmt, um diese auf vorgegebene thermodynamische Zustände zu bringen. Die von dem wärmeren Strom (hier Temperierfluid) abgegebene und gleichzeitig von dem kalten Strom (hier Tinte) aufgenommene thermische Leistung wird dazu verwendet, die Tinte in ihrer Temperatur zu temperieren.

Der "Volumenstrom" (oder ungenauer Durchflussrate und Durchflussmenge) ist eine physikalische Größe, die angibt, wie viel Volumen des Temperierfluids pro Zeitspanne (und damit wie viel Energie pro Zeit) durch einen festgelegten Querschnitt transportiert wird. Der durch die Regelung sich verändernde Volumenstrom wird von dem Proportionalventil 23 gesteuert zum Regeln der gewünschten Solltemperatur. Dadurch wird im Grunde genommen diejenige Menge an Energie geregelt, die pro Zeitspanne für das Erwärmen der Tinte zur Verfügung steht.

Ein Proportionalventil 23 ist ein Stetigventil, das mit Hilfe eines Proportionalmagneten nicht nur diskrete Schaltstellungen zulässt, sondern einen stetigen Übergang der Ventilöffnung. Proportionalventile 23 werden in der Hydraulik und Pneumatik besonders dort eingesetzt, wo veränderliche Volumenströme gefordert sind. Proportionalventil 23 sind elektromagnetische oder mediumgesteuerte Ventile, die beliebige Zwischenstellungen zwischen offen und geschlossen annehmen können. Solche Volumenstromregler für variablen Volumenstrom arbeiten in der Regel elektronisch und erhalten von dem übergeordneten Regler 25 Sollwerte für die Fluidmenge, die zum Regeln der gewünschten Tintentemperatur notwendig ist. Selbstverständlich können auch andere Ventile verwendet werden, die sich elektrisch, hydraulisch oder elektromagnetisch steuern lassen, um einen gewünschten Volumenstrom zu erhalten.

Die Effektivität des Wärmetauschers 26 ist abhängig von den beiden Eintrittstemperaturen von Tinte und Temperierfluid, der übertragenen thermischen Leistung, sowie insbesondere von der Strömungsführung beider Fluidströme durch den Wärmetauscher 26, wie z. B. eine Gleichstrom-, eine Gegenstrom-, eine Kreuzstrom oder auch Gegenstromwirbelführung. Wesentlich dabei ist, dass die thermische Wärmeübertragung effektiv und schnell von statten geht. Somit kann die gewünschte und spezifizierte Tintensolltemperatur schnell und ohne große Wärmeverluste erreicht werden.

Um eine bessere Effektivität zu erreichen und eine schnellere Solltemperatur der Tinte zu erreichen, kann die Tinte im Tintenvorratsbehälter 28 auf eine Temperatur nahe der Solltemperatur grob vortemperiert werden. Denn wenn ein großer Temperaturunterschied zwischen der Tintentemperatur im Tintenvorratsbehälter 28 und der Solltemperatur der Tinte am Tintenaustritt 36 des Wärmetauschers 26 besteht, so benötigt die Regelung auf Solltemperatur wesentlich länger und ist Energie aufwändiger.

Neben den Materialeigenschaften des Wärmetauschers 26 wird die Wirksamkeit der Wärmeübertragung von der geometrischen Führung der Stoffströme zueinander bestimmt.

Die Temperiervorrichtung 10 hat den Vorteil, dass ein variabler Volumenstrom eines temperierten Fluids dazu dient, die gewünschte Tintentemperatur einzustellen. Wenn das temperierte Fluid auf eine Temperatur etwa gleich oder nur geringfügig größer als die maximal zulässige Tintentemperatur eingestellt ist, kann die Tintentemperatur nie höher werden als die Temperatur des Temperierfluids. Denn nach der Fluidquelle 12 wird das Temperierfluid nicht mehr temperiert, sondern im Gegenteil, es erleidet Wärmeverluste beim Durchströmen von Fluidleitungen 18, Regeleinrichtung 22 und Wärmetauscher 26, was zu einer kleinen Temperaturerniedrigung des Temperierfluids auf dem Weg zum Wärmetauscher 26 führt. Außerdem braucht das Temperierfluid nicht genau auf seine Temperatur temperiert zu sein. Fluktuationen der Temperatur des Temperierfluids in der Fluidquelle 12 werden durch die genaue Regelung über den Volumenstrom zum Wärmetauscher 26 hin kompensiert.

Es kann auch vorgesehen werden, dass die Temperatur des Temperierfluids während des Betriebs geändert wird, falls damit eine schnellere Regelung möglich wäre unter den gegebenen Voraussetzungen, wie Umgebungstemperatur, Tintentemperatur im Tintenvorratsbehälter 28 oder die Temperatur des Fluids, das der Fluidquelle 12 zugeliefert wird.

Die Menge des Volumenstroms braucht nicht gemessen zu werden, denn es wird nur die Isttemperatur der Tinte als Regelungsgröße nahe beim "Verbrauch" gemessen. Die Umgebungstemperatur braucht ebenfalls nicht berücksichtigt zu werden. Sie ist lediglich eine Störgröße, die die Tintentemperatur im Tintenvorratsbehälter 28 beeinflusst oder die Fluidtemperatur in der Fluidquelle 12, falls noch nicht vortemperiert ist. So wird also die Aufwärmzeit verkürzt oder verlängert, je nach Höhe der Umgebungstemperatur.

Mit dieser Temperiervorrichtung 10 kann die Tinte schnell auf ihre Betriebstemperatur gebracht werden. Die Leitungslängen haben keinen Einfluss auf die Genauigkeit der Regelung, sondern höchstens auf die Dauer des Erwärmens der Tinte bis zur Betriebstemperatur. Die Leitungen sollten daher so kurz wie möglich gehalten werden, damit nicht zu viel Wärme verloren geht und die Regelung schnell genug arbeiten kann. Auch werden nicht für jede Tinte eine eigene Fluidquelle 12 mit Temperierung benötigt. Somit sind weniger Elektronikbauteile nötig. Jede Tinte weist ihren eigenen Regelkreis (Regeleinrichtung 22, Wärmetauscher 26 sowie Temperatursensor 24 mit Rückkopplung des gemessenen Istwerts zur Regeleinrichtung 22) zum Regeln der Tinte auf jeweils ihre eigene Betriebstemperatur auf. Lediglich die Fluidquelle 12 ist für alle Tinten, die in dem Tintendrucker verdruckt werden, gemeinsam. Somit bleibt die Tinte im Druckbetrieb immer innerhalb des spezifizierten Toleranzbereichs, und das unabhängig vom Druckjob, der gerade abgearbeitet wird.

### Bezugszeichenliste

- 12: Fluidquelle
- 13: Heizelement
- 15: Kühlelement
- 16: Abfluss
- 18: Fluidleitung
- 19: Ausgang (der Steuereinrichtung)
- 20: Zufluss
- 21: Zuführanschluss
- 22: Regeleinrichtung
- 23: Proportionalventil
- 24: Temperatursensor
- 25: Regler
- 26: Wärmetauscher
- 27: Rückfluss
- 28: Tintenvorratsbehälter
- 29: Rückführleitung
- 30: Fluideintritt
- 32: Fluidaustritt
- 32: Fluidaustritt
- 34: Tinteneintritt
- 36: Tintenaustritt
- 40: Druckeinheit
- 42: Druckkopf
- 44, D_{Y}, D_{M}, D_{C}, D_{K}: Distributionstank
- 46: Aufzeichnungsträger
- YMCK: Farben
- WT_{Y}, WT_{M}: Wärmetauscher Yellow, Magenta

## Patentansprüche

1. Temperiervorrichtung zum Temperieren von Tinte für einen Tintendrucker, die aufweist:
- eine Fluidquelle (12) mit einem Temperierfluid, das auf eine vorbestimmte Temperatur vortemperiert ist und das an einem Abfluss (16) der Fluidquelle (12) bereitgestellt wird,
- eine Regeleinrichtung (22) mit einem Eingang (20), der über eine Fluidleitung (18) mit dem Abfluss (16) der Fluidquelle (12) verbunden ist, einer Steuereinheit (23, 25), die die Durchflussmenge des zugeführten Temperierfluids abhängig von einer gemessenen Temperatur der zu temperierenden Tinte als Regelgröße steuert, und mit einem Ausgang (19), an dem das Temperierfluid als Stellgröße bereitgestellt wird,
- einen Wärmetauscher (26) mit einem Fluidkreis und einem Tintenkreis, die beide thermisch miteinander in Kontakt stehen, aber physisch voneinander getrennt sind, zum Übertragen von thermischer Energie von dem Fluidkreis auf den Tintenkreis, wobei der Fluidkreis mit der Regeleinrichtung (22) verbunden ist, um ihn mit dem Temperierfluid zu speisen, und wobei der Tintenkreis mit einem Tintenvorratsbehälter (28) verbunden ist, um ihn mit Tinte zu speisen, die zum Drucken auf eine Solltemperatur temperiert werden soll,
- zumindest einen Temperatursensor (24), der an oder nach dem Wärmetauscher (26) angeordnet ist und elektrisch mit dem Regeleinrichtung (22) verbunden ist, wobei der Temperatursensor (24) die Temperatur der Tinte als Istwert misst und an die Steuereinheit (23, 25) der Regeleinrichtung (22) zurückkoppelt, um die Temperatur der Tinte auf ihre Sollgröße zu regeln.

2. Temperiervorrichtung nach Anspruch 1, **dadurch gekennzeichnet, dass** der Wärmetauscher (26) ein Plattenwärmetauscher ist.

3. Temperiervorr++ichtung nach Anspruch 1, **dadurch gekennzeichnet, dass** die Fluidquelle (12) ein Heizelement (13) und/oder ein Kühlelement (15) als Temperierelemente aufweist, durch die das Temperierfluid auf eine vorbestimmte Fluidtemperatur temperiert wird.

4. Temperiervorrichtung nach Anspruch 1, **dadurch gekennzeichnet, dass** das Temperierfluid Wasser mit gegebenenfalls hinzugefügten Additiven ist.

5. Temperiervorrichtung nach Anspruch 4, **dadurch gekennzeichnet, dass** die Fluidquelle (12) aus einem Hausanschluss mit Wasser gespeist wird, zum Nachfüllen oder Auffüllen der Fluidquelle (12) mit Wasser.

6. Temperiervorrichtung nach einem der vorhergehenden Ansprüche, **dadurch gekennzeichnet, dass** die Fluidquelle (12) einen Temperatursensor (24) aufweist zum Messen der Fluidtemperatur.

7. Temperiervorrichtung nach einem der vorhergehenden Ansprüche, **dadurch gekennzeichnet, dass** zumindest ein Temperatursensor (24) direkt am Tintenaustritt (36) oder nach dem Tintenaustritt (36) des Wärmetauschers (26) angeordnet ist, der die Temperatur der Tinte innerhalb der Tintenleitung (38) misst.

8. Temperiervorrichtung nach einem der vorhergehenden Ansprüche, **dadurch gekennzeichnet, dass** die Steuereinheit (23, 25) der Regeleinrichtung (22) einen Regler (25) und ein steuerbares Ventil (23) aufweist, wobei der Regler (25) vorzugsweise ein PI-Regler ist und das Ventil (23) vorzugsweise ein Proportionalventil ist, und die Steuereinheit (23, 25) mit einem Temperatursensor (24) zum Messen der Tintentemperatur verbunden ist, um den Volumenstrom pro Zeit des Temperierfluids abhängig von einem Istwert der Tinte und der Differenz zu einem gewünschten Sollwert zu steuern, um die Tinte auf Betriebstemperatur zu bringen.

9. Verfahren zum Betreiben einer Temperiervorrichtung von Tinte für einen Tintendrucker mit einer Temperiervorrichtung nach Anspruch 1, **gekennzeichnet durch**:
- Bereitstellen eines vortemperierten Temperierfluids,
- Zuführen des Temperierfluids zu einer Regeleinrichtung (22),
- Regeln der Durchflussmenge pro Zeit des Temperierfluids durch die Regeleinrichtung (22) abhängig von einem gemessenen Istwert der Tintentemperatur,
- thermisches Inkontaktbringen des Temperierfluids mit der Tinte in einem Wärmetauscher (26), wodurch thermische Energie von dem Temperierfluid auf die zu druckende Tinte übertragen wird, um die Tinte auf die gewünschte Solltemperatur zu bringen, und
- Messen der Tintentemperatur nach dem Ausgang des Wärmetauschers (26) und Rückkoppeln des gemessenen Istwertes zu der Regeleinrichtung (22) zum Regeln der Tintentemperatur.
